# EUROPÄISCHE PATENTSCHRIFT

(11) **EP 2 902 800 B1**
(45) Veröffentlichungstag und Bekanntmachung des Hinweises auf die Patenterteilung: **01.06.2016**
(21) Anmeldenummer: 14197609.2
(22) Anmeldetag: 12.12.2014
(51) Int. Cl.: G01S 7/481, G01S 17/42

(54) **Optoelektronischer Sensor und Verfahren zur Erfassung von Objekten in einem Überwachungsbereich**
Optoelectronic sensor and method for detecting objects in a surveillance area
Capteur optoélectronique et procédé destiné à la détection d'objets dans une zone de surveillance

(30) Priorität: 04.02.2014 DE 102014101312
(43) Veröffentlichungstag der Anmeldung: 05.08.2015
(73) Patentinhaber: SICK AG, 79183 Waldkirch (DE)
(72) Erfinder: Nübling, Ralf Ulrich, 79211 Denzlingen (DE)
(74) Vertreter: Hehl, Ulrich

(56) Entgegenhaltungen:
- WO-A1-2013/176362
- DE-A1-102004 014 041
- DE-B3-102011 011 875

## Beschreibung

Die Erfindung betrifft einen optoelektronischen Sensor und ein Verfahren zur Erfassung von Objekten in einem Überwachungsbereich nach dem Oberbegriff von Anspruch 1 beziehungsweise 10.

Für Abstandsmessungen, die einen großen horizontalen Winkelbereich des Messsystems erforderlich machen, eignen sich optoelektronische Systeme und besonders Laserscanner. In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen.

Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder durch mehrere Abtastungen desselben Objekts an verschiedenen Stellen dessen Kontur bestimmen. Die dritte Raumkoordinate kann durch eine Relativbewegung in Querrichtung ebenfalls erfasst werden, beispielsweise durch einen weiteren Bewegungsfreiheitsgrad der Ablenkeinheit in dem Laserscanner oder indem das Objekt relativ zu dem Laserscanner befördert wird. So können auch dreidimensionale Konturen ausgemessen werden.

Neben solchen Messanwendungen werden Laserscanner auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS).

Die Abtastung der Überwachungsebene in einem Laserscanner wird üblicherweise dadurch erreicht, dass der Sendestrahl auf einen rotierenden Drehspiegel trifft. Lichtsender, Lichtempfänger sowie zugehörige Elektronik und Optik sind im Gerät fest montiert und vollziehen die Drehbewegung nicht mit. Durch den Spiegel ergeben sich sehr hohe Anforderungen an die Ausrichtung der Lichtsender und Lichtempfänger zur Drehachse. Abweichungen davon führen zu einer verbogenen Überwachungsebene. Außerdem sind solche Optikeinheiten baugroß, weil sich immer ein Teil der Objektweite über den Spiegel bis zur Empfangsoptik in das Gerät erstreckt. Streulichteffekte an der Frontscheibe durch die Frontscheibe selbst oder deren Verunreinigung führen zu einer Beeinträchtigung der Sensorfunktion.

Es ist auch bekannt, den Drehspiegel durch eine mitbewegte Abtasteinheit zu ersetzten. Beispielsweise rotiert in der DE 197 57 849 B4 der gesamte Messkopf mit Lichtsender und Lichtempfänger. Die EP 2 388 619 A1 sieht ebenfalls eine drehbare Sende-/Empfangseinheit vor. Diese Abtasteinheit wird beispielsweise nach dem Transformationsprinzip von den drehfesten Bereichen des Sensors mit Energie versorgt.

In den bekannten Laserscannern wird eine Drehbewegung durch einen Motor erzeugt, an dessen Welle der Drehspiegel oder die Abtasteinheit befestigt ist. Dieser klassische Motoraufbau bringt zwei Lagerungen der Welle mit sich, benötigt Bauraum und zudem Aufwand bei der Montage.

Aus der WO2013/176362 A1 ist ein 3D-Scanner bekannt, der ein zweiteiliges Gehäuse mit einem ruhenden Teil und einem rotierenden Teil aufweist. Der ruhende Teil weist Anschlüsse und die Lichtquelle auf, während der rotierende Teil den Messkopf bildet. Die Drehbewegung wird von einem Hohlwellenantrieb erzeugt, in dem ein Schleifring als Rotor sitzt. Der Schleifring umfasst einen unteren zylindrischen Teil, der von der Welle angetrieben wird. Nach oben hin erweitert sich der Schleifring zu einer Art Teller mit vergrößertem Durchmesser, auf dem mehrere kreisförmige Leiterplatten des Messkopfes aufliegen.
Daher ist Aufgabe der Erfindung, den Aufbau eines Sensors mit mitbewegter Abtasteinheit zu vereinfachen.
Diese Aufgabe wird durch einen optoelektronischen Sensor und ein Verfahren zur Erfassung von Objekten in einem Überwachungsbereich nach Anspruch 1 beziehungsweise 10 gelöst. Dabei ist der Sensor zweiteilig mit einer Sockeleinheit und einer Abtasteinheit aufgebaut. Die Abtasteinheit wird relativ zu der Sockeleinheit in Drehbewegung versetzt, um den Überwachungsbereich periodisch mit einem Lichtstrahl abzutasten, dessen Echos aus dem Überwachungsbereich ausgewertet werden. Die Sockeleinheit bleibt stationär und umfasst alle weiteren ruhenden Elemente des Sensors, beispielsweise ein Gehäuse. Dabei bezieht sich stationär oder ruhend auf ein übliches Bezugssystem des Sensors, der dennoch insgesamt bewegt werden kann, beispielsweise in mobilen Anwendungen an einem Fahrzeug, welches in diesem Fall das hier als stationär bezeichnete Bezugssystem bildet. Die Erfindung geht dann von dem Grundgedanken aus, die Abtasteinheit über eine erste Leiterkarte der Abtasteinheit in Rotation zu versetzen. Dafür ist die erste Leiterkarte an ihrem Außenumfang in einem Lager der Sockeleinheit drehbar gelagert.

Die Erfindung hat den Vorteil, dass es nur ein Lager und nicht wie herkömmlich zwei Lagerungen einer Welle einerseits im Motor und andererseits für die Kopplung zwischen Welle und Abtasteinheit gibt. Die Lagerung am Außenumfang unterdrückt wegen des großen Lagerdurchmessers weitgehend nachteilige Effekte von Lagerspiel. Alle auftretenden Kräfte können von dem Lager problemlos aufgenommen werden. Der Sensor ist mit seinem einfachen Aufbauf der hohen Gehäuseintegration besonders bauklein und kostengünstig, und die erste Leiterkarte kann vollflächig genutzt werden, weil kein Teil ihrer Fläche für die Kopplung an eine Welle benötigt wird.

Die erste Leiterkarte ist bevorzugt kreisförmig. Diese Geometrie eignet sich für eine Drehbewegung und äußere Lagerung besonders.

Das Lager ist bevorzugt ein Ringlager. Damit wird die erste Leiterkarte, die in diesem Fall kreisförmig sein sollte, über ihren gesamten Umfang im Lager gestützt. Dafür genügt ein einfaches Ringlager ohne besondere Ansprüche an dessen Güte. Trotzdem werden die auftretenden Kräfte gut aufgenommen und verteilt, so dass die Drehung stabil und gleichmäßig wird. Wegen seines geringes Gewichts und seiner Baugröße ist ein Dünnringlager bevorzugt.

Die erste Leiterkarte bildet vorzugsweise einen Träger für die Abtasteinheit. Die Abtasteinheit kann einen vollwertigen mitdrehenden Optikkopf beispielsweise mit Sender, Empfänger, zugehörigen Optiken und einem Tubus für die optische Kanaltrennung zwischen Sende- und Empfangspfad bilden. Diese Elemente werden von der ersten Leiterkarte getragen, so dass die Kopplung zwischen Sockeleinheit und Abtasteinheit allein von der außen gelagerten ersten Leiterkarte geleistet wird.

Lichtsender und Lichtempfänger sind bevorzugt auf der ersten Leiterkarte angeordnet. Die erste Leiterkarte trägt also Lichtsender und Lichtempfänger nicht nur mechanisch, sondern diese Elemente sind direkt auf der ersten Leiterkarte bestückt. Zusätzlich kann die erste Leiterkarte zumindest Teile der Sende- und Empfangselektronik, beispielsweise einen Sendertreiber und Verstärker, gegebenenfalls auch weitere Steuer- und Auswertungselemente umfassen. Außerdem ist denkbar, in der Abtasteinheit mindestens eine weitere Leiterkarte vorzusehen, wobei dann die genannten Elemente auf die Leiterkarten verteilt sind.

Die erste Leiterkarte weist bevorzugt eine Schnittstelleneinheit zur kontaktlosen Übertragung von Energie und/oder zum Datenaustausch zwischen der Sockeleinheit und der Abtasteinheit auf. Damit bildet die erste Leiterkarte auch eine drahtlose Schnittstelle, über welche die Abtasteinheit versorgt beziehungsweise angesteuert wird und deren Daten ausgelesen werden.

Die erste Leiterkarte bildet bevorzugt den Rotor eines Antriebs für die Drehbewegung der Abtasteinheit gegenüber der Sockeleinheit. Dazu sind auf der ersten Leiterkarte die entsprechenden Motorwindungen oder Magnete integriert. Die erste Leiterkarte wird damit selbst zum Teil des Antriebs. Es gibt keinen eigenen Motor mehr, die erste Leiterkarte erfüllt diese Funktion mit.

Die Sockeleinheit weist bevorzugt eine zweite Leiterkarte auf, die den Stator des Antriebs bildet. Erneut sind dazu die erforderlichen Motorwindungen oder Magnete nun auf der zweiten Leiterkarte integriert. Der Motor wird auf diese Weise ausgesprochen kompakt und flach.

Die Sockeleinheit weist bevorzugt eine zweite Leiterkarte mit einer Schnittstelleneinheit zur kontaktlosen Versorgung der Abtasteinheit mit Energie und/oder zum Datenaustausch auf. Dabei handelt es sich noch bevorzugter um dieselbe Leiterkarte wie diejenige, welche den Stator des Antriebs bildet. Diese zweite Leiterkarte hat dann noch zusätzliche Funktionen als drahtlose Schnittstelle, um für die Abtasteinheit Energie bereitzustellen, sie anzusteuern oder Daten auszulesen. Der Antrieb wird damit selbst zu einer integrierten Zusatzfunktion und erfordert keine exklusiven Bauteile. Außerdem kann die zweite Leiterkarte eine Steuer- und Auswertungseinheit umfassen. Ein solcher besonders kompakter Sensor umfasst dann lediglich noch die beiden Leiterkarten und gegebenenfalls eine Optik in der Abtasteinheit sowie möglicherweise einige unverzichtbare zusätzliche elektronische Elemente in der Sockeleinheit. Allgemein können die elektronischen Funktionen, insbesondere die Steuer- und Auswertungseinheit, aber auch nahezu beliebig auf die erste Leiterkarte, die zweite Leiterkarte und weitere Leiterkarten in Abtasteinheit und/oder Sockeleinheit verteilt sein.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Schnittdarstellung durch einen optoelektronischen Sensor;
- Fig. 2: eine Draufsicht auf eine rotierende Leiterkarte und deren Lagerung am Außenumfang; und
- Fig. 3: eine schematische Schnittdarstellung durch eine weitere Ausführungsform eines optoelektronischen Sensors.

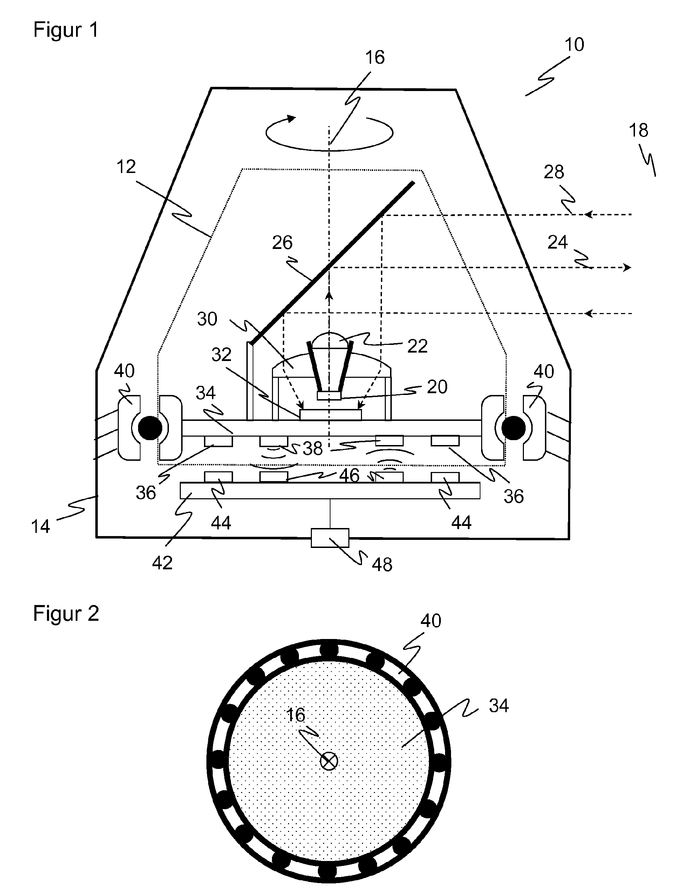

Fig. 1 zeigt eine schematische Schnittdarstellung durch einen optoelektronischen Sensor 10 in einer Ausführungsform als Laserscanner. Es sind diverse andere Anordnungen der einzelnen Elemente eines optoelektronischen Sensors zur Erfassung von Objekten denkbar und von der Erfindung umfasst. Insbesondere gibt es eine Vielzahl bekannter Varianten von Laserscannern, aus denen jeweils durch entsprechende Abwandlung erfindungsgemäße Laserscanner entstehen können. Die Darstellung soll also nur beispielhaft zu verstehen sein.

Der Sensor 10 umfasst in grober Aufteilung eine bewegliche Abtasteinheit 12 und eine Sockeleinheit 14. Die gestrichelte Linie zur Abgrenzung der Abtasteinheit 12 in Figur 1 ist nur eine gedachte Linie und kein eigenes Gehäuse der Abtasteinheit 12. Das wäre zwar auch denkbar und von der Erfindung umfasst, ist aber nicht notwendig.

Die Abtasteinheit 12 ist der optische Messkopf, während in der Sockeleinheit 14 weitere Elemente wie eine Versorgung, Auswertungselektronik, Anschlüsse und dergleichen untergebracht sind. Im Betrieb wird die Abtasteinheit 12 gegenüber der Sockeleinheit 14 in eine Drehbewegung um eine Drehachse 16 versetzt, um so einen Überwachungsbereich 18 periodisch abzutasten.

In der Abtasteinheit 12 erzeugt ein Lichtsender 20 mit Hilfe einer Sendeoptik 22 einen Sendelichtstrahl 24, der über einen Spiegel 26 umgelenkt und in den Überwachungsbereich 18 ausgesandt wird. Trifft der Sendelichtstrahl 24 in dem Überwachungsbereich 18 auf ein Objekt, so kehrt ein entsprechender Lichtstrahl als remittiertes Licht 28 zu dem Sensor 10 zurück. Das remittierte Licht 28 wird erneut von dem Spiegel 26 umgelenkt, von einer Empfangsoptik 30 auf einen Lichtempfänger 32 geführt und dort in ein elektrisches Empfangssignal gewandelt.

Lichtsender 20 und Lichtempfänger 32 sind auf einer senkrecht zu der Drehachse 16 orientierten ersten Leiterkarte 34 angeordnet. Die erste Leiterkarte kann außerdem zumindest Teile einer nicht explizit gezeigten Steuer- und Auswertungseinheit umfassen, mit welcher der Sendelichtstrahl 24 erzeugt und das Empfangssignal ausgewertet wird.

Auf einer Lichtsender 20 und Lichtempfänger 32 abgewandten Rückseite beziehungsweise in inneren Schichten weist die erste Leiterkarte nur ganz schematisch dargestellte Motorwicklungen 36 beziehungsweise Magnete auf. Dazu versetzt ist eine drahtlose Schnittstelleneinheit 38 vorgesehen, die beispielsweise kapazitiv, induktiv oder nach jeder anderen an sich bekannten Technik kontaktlos Energie von der Sockeleinheit 14 bezieht oder mit der Sockeleinheit 14 kontaktlos Daten austauscht. Auf die spezifische Ausgestaltung der Motorwicklungen 36 und der Schnittstelleneinheit 38 wird hier nicht näher eingegangen, und dementsprechend sollen auch aus der zeichnerischen Darstellung in Figur 1 keinerlei diesbezügliche Einschränkungen der Anordnung abgeleitet werden.
Die erste Leiterkarte 34 wird an ihrem Außenumfang in dem inneren Ring eines Ringlagers 40 gelagert. Der äußere Ring des Ringlagers 40 ist in der Sockeleinheit 14 fixiert. Dadurch kann sich die erste Leiterkarte 34 in dem Ringlager 40 gegenüber der Sockeleinheit 14 drehen. Figur 2 zeigt hierzu ergänzend eine Draufsicht auf die erste Leiterkarte 34 in dem Ringlager 40. Auf diese Weise bildet die erste Leiterkarte 34 einen Träger der Abtasteinheit 12, denn es ist die erste Leiterkarte 34, die drehbeweglich gelagert ist, und Sendeoptik 22, Empfangsoptik 30 sowie Spiegel 26 werden mechanisch auf der ersten Leiterkarte 34 abgestützt.

In der Sockeleinheit 14 befindet sich eine zweite Leiterkarte 42, die korrespondierend zu den Motorwicklungen 36 eigene Motorwicklungen 44 oder Magnete aufweist. Damit bilden die beiden Leiterkarten 34, 42 selbst den Antrieb, wobei die erste Leiterkarte 34 in der Abtasteinheit 12 die Rolle des Rotors und die zweite Leiterkarte 42 in der Sockeleinheit 14 die Rolle des Stators einnimmt. Ein zusätzlicher eigener Antrieb ist damit nicht mehr erforderlich.

Die zweite Leiterkarte 42 umfasst außerdem eine drahtlose Schnittstelleneinheit 46, die gemeinsam mit der drahtlosen Schnittstelleneinheit 38 der ersten Leiterkarte eine Versorgungseinheit zur kontaktlosen Versorgung der Abtasteinheit 12 mit Energie und/oder eine vorzugsweise bidirektionale kontaktlose Datenschnittstelle bildet.

Schließlich befindet sich auf der zweiten Leiterkarte 42 auch nicht dargestellte weitere Elektronik, die im Zusammenspiel mit entsprechender Elektronik der ersten Leiterkarte 34 die Steuer- und Auswertungseinheit des Sensors 10 bildet. Die Aufteilung zwischen Abtasteinheit 12 und Sockeleinheit 14 kann in dieser Hinsicht in verschiedenen Ausführungsformen der Erfindung praktisch beliebig variieren. Bevorzugt wird diese Aufteilung so vorgenommen, das einerseits die Abtasteinheit 12 wenig Energie braucht und andererseits eine geringe Bandbreite für die drahtlose Datenübertragung ausreicht.

Im Betrieb aktiviert die Steuer- und Auswertungseinheit den Lichtsender 20 und erhält das Empfangssignal des Lichtempfängers 32 zur weiteren Auswertung. Sie steuert außerdem die Drehbewegung über die Motorwicklungen 36, 44 und erhält das Signal einer nicht gezeigten, von Laserscannern allgemein bekannten Winkelmesseinheit, welche die jeweilige Winkelstellung der Abtasteinheit 12 bestimmt. Zur Auswertung wird vorzugsweise mit einem Lichtlaufzeitverfahren die Distanz zu einem angetasteten Objekt gemessen. Dazu wird in einem phasenbasierten System das Sendelicht des Lichtsenders 20 moduliert und eine Phasenbeziehung zu dem Empfangssignal des Lichtempfängers 32 ausgewertet. Alternativ werden in einem pulsbasierten System kurze Lichtpulse zu einem Sendezeitpunkt als Sendelicht ausgesandt und aus dem Empfangssignal deren Empfangszeitpunkt ermittelt. Dabei sind sowohl Einzelpulsverfahren, die jeweils aus einem einzigen Sendepuls eine Entfernung bestimmen, als auch Pulsmittelungsverfahren denkbar, in denen das Empfangssignal nach einer Vielzahl aufeinanderfolgender Sendepulse gesammelt und statistisch ausgewertet wird. Da auch die jeweilige Winkelstellung, unter welcher der Sendelichtstrahl 24 jeweils ausgesandt wurde, von der Winkelmesseinheit bekannt ist, stehen nach jeder Umdrehung der Abtasteinheit 12 über den Winkel und die Entfernung zweidimensionale Polarkoordinaten aller Objektpunkte in einer Abtastebene zur Verfügung. Durch eine zusätzliche Verkippung der Abtasteinheit 12 könnte auch ein dreidimensionaler Überwachungsbereich 18 erfasst werden.

Damit sind die Objektpositionen beziehungsweise Objektkonturen bekannt und können über eine Sensorschnittstelle 48 ausgegeben werden. Die Sensorschnittstelle 48 oder ein weiterer, nicht gezeigter Anschluss dienen umgekehrt als Parametrierschnittstelle. Bei Anwendungen in der Sicherheitstechnik werden Schutzfelder, die in dem Überwachungsbereich 18 konfiguriert werden können, auf unzulässige Eingriffe überwacht, und daraufhin wird gegebenenfalls ein sicherheitsgerichtetes Abschaltsignal über die dann sicher ausgebildete Schnittstelle 48 (OSSD, Output Signal Switching Device) ausgegeben.

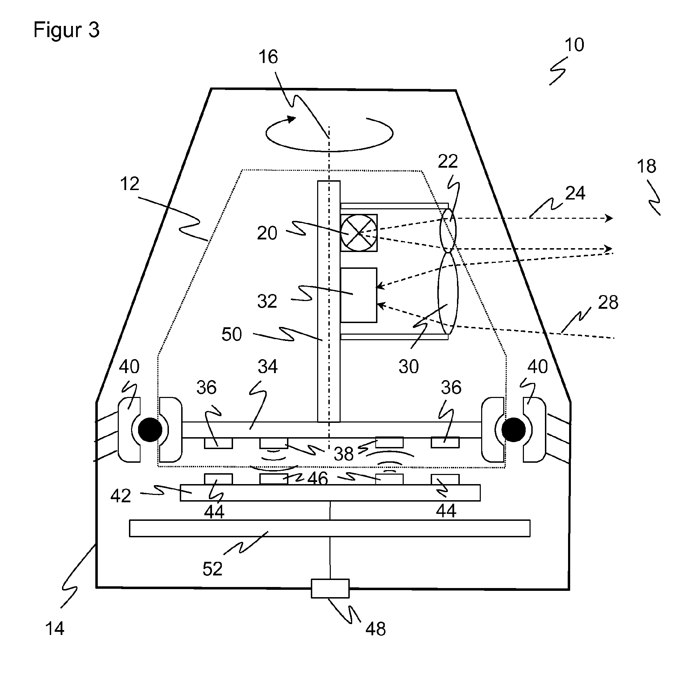

Figur 3 zeigt eine schematische Schnittdarstellung durch eine weitere Ausführungsform eines optoelektronischen Sensors 10. Darin bezeichnen gleiche Bezugszeichen die gleichen Merkmale wie in Figur 1. Der Sensor 10 unterscheidet sich von demjenigen nach Figur 1 durch den optischen Aufbau in der Abtasteinheit 12 und durch zusätzliche Leiterkarten 50, 52. Letzteres soll nur als ein Beispiel für die mehrfach erwähnten zusätzlichen Leiterkarten dienen, welche die erste Leiterkarte 34 beziehungsweise die zweite Leiterkarte 42 ergänzen.

Lichtsender 20 und Lichtempfänger 32 sind in dieser Ausführungsform mit ihren optischen Achsen senkrecht zu der Drehachse 16 ausgerichtet, also gegenüber Figur 1 um 90° verkippt. Dadurch ist kein Spiegel 26 erforderlich. Dafür ist eine zusätzliche Leiterkarte 50 vorgesehen, die auf der Drehachse 16 liegt und elektrisch mit der ersten Leiterkarte 34 verbunden ist. Um eine weitere optische Variationsmöglichkeit zu zeigen, liegen hier Lichtsender 20 und Lichtempfänger 32 nebeneinander, statt wie in Figur 1 koaxial und nutzen eine Doppellinse als Sendeoptik 22 und Empfangsoptik 30.

In der Sockeleinheit 14 befindet sich ebenfalls eine weitere Leiterkarte 52, die mit der zweiten Leiterkarte 42 elektrisch verbunden ist. Diese Leiterkarte 52 dient funktional als Erweiterung der zweiten Leiterkarte 42, sofern diese nicht genügend Platz und Kapazität bereitstellt. Je nach Ausführungsform kann auf die weitere Leiterkarte 52 verzichtet werden, oder es werden umgekehrt noch mehr Leiterkarten zur Verfügung gestellt.

Der Lichtsender 22 kann in allen Ausführungsformen jeweils als einfache Lichtquelle mit einer Wellenlänge beispielsweise im sichtbaren, ultravioletten oder infraroten Spektrum etwa in Form einer Halbleiterdiode, in anderen Ausführungsformen aber auch als beispielsweise zeilen- oder matrixförmige Anordnung zahlreicher Lichtquellen aufgebaut sein. Entsprechend kann es sich bei dem Lichtempfänger 32 um eine einfache Empfangsfläche, etwa einer Photodiode, oder um eine beispielsweise zeilen- oder matrixförmige Anordnung von Lichtempfangselementen handeln, wie einen CCD- oder CMOS-Chip. Damit entsteht dann nicht nur ein einzelner Abtaststrahl, sondern eine entsprechende Vielzahl zur Aufnahme von zweidimensionalen Bilddaten oder dreidimensionalen Bilddaten mit Hilfe eines Lichtlaufzeitverfahrens. Prinzipiell können nahezu beliebige Sensoreinheiten in der Abtasteinheit 12 rotieren und so den Überwachungsbereich 18 erfassen, beispielsweise auch mehrere Sensoreinheiten in unterschiedlichen Winkelstellungen, die einander mit gleichen oder unterschiedlichen physikalischen Messprinzipien ergänzen.

Durch die erfindungsgemäße Lagerung der ersten Leiterkarte 34 an deren Außenumfang kann die herkömmliche eigentliche Motorwelle mit ihren zwei Lagerungen gänzlich entfallen. Stattdessen wird direkt die erste Leiterkarte 34 mit ihren darauf aufgebrachten Motorwicklungen 36 und den von der ersten Leiterkarte 34 getragenen Elementen der Abtasteinheit 12 in Rotation versetzt. Das Ringlager 40 bildet ein einziges großes Lager um die erste Leiterkarte 34 herum. Aufgrund des großen Lagerdurchmessers sind Effekte durch Lagerspiel untergeordnet, und es kann auf sehr günstige Lager zurückgegriffen werden, beispielsweise Dünnringlager vergleichsweise geringer Güte. Ein derartiges Lager kann alle auftretenden Kräfte sehr gut aufnehmen.

## Patentansprüche

1. Optoelektronischer Sensor (10) zur Erfassung von Objekten in einem Überwachungsbereich (18), insbesondere Laserscanner, der einen Lichtsender (20) zum Aussenden eines Sendelichtstrahls (24), eine Sockeleinheit (14) und eine zur periodischen Abtastung des Überwachungsbereichs (18) mit dem Sendelichtstrahl (24) gegenüber der Sockeleinheit (14) drehbare Abtasteinheit (12) mit einer ersten Leiterkarte (34), einen Lichtempfänger (32) zum Erzeugen eines Empfangssignals aus dem von Objekten in dem Überwachungsbereich (18) remittierten Licht (28) und eine Auswertungseinheit (34, 42, 50, 52) zur Erfassung von Informationen über Objekte in dem Überwachungsbereich (18) anhand des Empfangssignals aufweist,wobei die Sockeleinheit (14) ein Lager (40) aufweist, in dem die erste Leiterkarte (34) an ihrem Außenumfang gegenüber der Sockeleinheit (14) drehbar gelagert ist und die erste Leiterkarte (34) den Rotor eines Antriebs für die Drehbewegung der Abtasteinheit (12) gegenüber der Sockeleinheit (14) bildet,
**dadurch gekennzeichnet,**
**dass** auf der ersten Leiterkarte (34) Motorwindungen (36) oder Magnete integriert
sind, so dass die erste Leiterkarte (34) selbst zum Teil des Antriebs wird.

2. Sensor (10) nach Anspruch 1,
wobei die erste Leiterkarte (34) kreisförmig ist.

3. Sensor (10) nach Anspruch 2,
wobei das Lager (40) ein Dünnringlager ist.

4. Sensor (10) nach einem der vorhergehenden Ansprüche,
wobei die erste Leiterkarte (34) einen Träger für die Abtasteinheit (12) bildet.

5. Sensor (10) nach einem der vorhergehenden Ansprüche,
wobei Lichtsender (20) und Lichtempfänger (32) auf der ersten Leiterkarte (34) angeordnet sind.

6. Sensor (10) nach einem der vorhergehenden Ansprüche,
wobei die erste Leiterkarte (34) eine Schnittstelleneinheit (38) zur kontaktlosen Übertragung von Energie und/oder zum Datenaustausch zwischen der Sockeleinheit (14) und der Abtasteinheit (12) aufweist.

7. Sensor (10) nach einem der vorhergehenden Ansprüche,
wobei die Sockeleinheit (14) eine zweite Leiterkarte (42) aufweist, die den Stator des Antriebs bildet.

8. Sensor (10) nach einem der vorhergehenden Ansprüche,
wobei die Sockeleinheit (14) eine zweite Leiterkarte (42) mit einer Schnittstelleneinheit (46) zur kontaktlosen Versorgung der Abtasteinheit (12) mit Energie und/oder zum Datenaustausch aufweist.

9. Verfahren zur Erfassung von Objekten in einem Überwachungsbereich (18), bei dem ein Sendelichtstrahl (24) ausgesandt, durch eine Drehbewegung einer Abtasteinheit (12) gegenüber einer Sockeleinheit (14) den Überwachungsbereich (18) periodisch abtastet, aus dem von Objekten in dem Überwachungsbereich (18) remittierten Licht ein Empfangssignal erzeugt und das Empfangssignal zur Erfassung von Informationen über Objekte in dem Überwachungsbereich (18) ausgewertet wird,wobei die Drehbewegung durch Lagerung des Außenumfangs einer ersten Leiterkarte (34) der Abtasteinheit (12) in einem Lager (40) ermöglicht wird und die erste Leiterkarte (34) den Rotor eines Antriebs für die Drehbewegung der Abtasteinheit (12) gegenüber der Sockeleinheit (14) bildet,
**dadurch gekennzeichnet,**
**dass** das Lager (40) die erste Leiterkarte (34) umgibt und dass auf der ersten Leiterkarte (34) Motorwindungen (36) oder Magnete integriert sind, so dass die erste
Leiterkarte (34) selbst zum Teil des Antriebs wird.

## Claims

1. An optoelectronic sensor (10) for detecting objects in a monitored zone (18), in particular a laser scanner, comprising a light transmitter (20) for transmitting a transmitted light beam (24), a base unit (14) and, for the periodic scanning of the monitored zone (18) by the transmitted light beam (24), a scanning unit (12) rotatable with respect to the base unit (12) and having a first circuit board (34), a light receiver (32) for generating a received signal from the light remitted by objects in the monitored zone (18), and an evaluation unit (34, 42, 50, 52) for detecting information on objects in the monitored zone (18) with reference to the received signal, wherein the base unit (14) has a bearing (40) in which the first circuit board (34) is rotatably supported at its outer periphery with respect to the base unit (14) and the first circuit board (40) forms the rotor of a drive for the rotational movement of the scanning unit (12) with respect to the base unit (14), **characterized in that** motor windings (36) or magnets are integrated on the first circuit board (34) so that the first circuit board (34) becomes part of the drive.

2. The optoelectronic sensor (10) in accordance with claim 1,
wherein the first circuit board (34) is circular.

3. The optoelectronic sensor (10) in accordance with claim 2,
wherein the bearing (40) is a sleeve bearing.

4. The optoelectronic sensor (10) in accordance with any of the preceding claims,
wherein the first circuit board (34) forms a carrier for the scanning unit (12).

5. The optoelectronic sensor (10) in accordance with any of the preceding claims,
wherein light transmitter (20) and light receiver (32) are arranged on the first circuit board (34).

6. The optoelectronic sensor (10) in accordance with any of the preceding claims,
wherein the first circuit board (34) has an interface unit (38) for the contactless transfer of energy and/or for data transfer between the base unit (14) and the scanning unit (12).

7. The optoelectronic sensor (10) in accordance with any of the preceding claims,
wherein the base unit (14) has a second circuit board (42) which forms the stator of the drive.

8. The optoelectronic sensor (10) in accordance with any of the preceding claims,
wherein the base unit (14) has a second circuit board (42) having an interface unit (46) for the contactless supply of the scanning unit (12) with energy and/or for the exchange of data.

9. A method of detecting objects in a monitored zone (18), wherein a transmitted light beam (24) is transmitted, periodically scans the monitored zone (18) by a rotational movement of a scanning unit (12) with respect to a base unit (14), a received signal is generated from the light remitted by objects in the monitored zone (18), and the received signal is evaluated for detecting information on objects in the monitored zone (18), wherein the rotational movement is enabled by supporting the outer periphery of a first circuit board (34) of the scanning unit (12) in a bearing (40) and the first circuit board (34) forms the rotor of a drive for the rotational movement of the scanning unit (12) with respect to the base unit (14), **characterized in that** the bearing (40) surrounds the first circuit board (34) and **in that** motor windings (36) or magnets are integrated on the first circuit board (34) so that the first circuit board (34) becomes part of the drive.

## Revendications

1. Capteur optoélectronique (10) pour la détection d'objets dans une zone de surveillance (18), en particulier scanner à laser, qui comprend un émetteur de lumière (20) pour émettre un faisceau de lumière émise (24), une unité formant socle (14), et une unité de palpage (12), capable de rotation par rapport à l'unité formant socle (14) pour le palpage périodique de la zone de surveillance (18) avec le faisceau de lumière émise (24), comprenant une première carte à circuits (34), un récepteur de lumière (32) pour engendrer un signal de réception à partir de la lumière (28) réémise par des objets dans la zone de surveillance (18), et une unité d'évaluation (34, 42, 50, 52) pour la détection d'informations concernant des objets dans la zone de surveillance (18) au moyen du signal de réception, dans lequel l'unité formant socle (14) comprend un palier (40) dans lequel la première carte à circuits (34) est montée avec faculté de rotation à sa périphérie extérieure par rapport à l'unité formant socle, et la première carte à circuits (34) forme le rotor d'un entraînement pour le mouvement rotatif de l'unité de palpage (12) par rapport à l'unité formant socle (14),
**caractérisé en ce que** des bobinages de moteur (36) ou des aimants sont intégrés sur la première carte à circuits, de sorte que la première carte à circuits (34) devient elle-même une partie de l'entraînement.

2. Capteur (10) selon la revendication 1,
dans lequel la première carte à circuits (34) a une forme circulaire.

3. Capteur (10) selon la revendication 2,
dans lequel le palier (40) est un palier à bague mince.

4. Capteur (10) selon l'une des revendications précédentes,
dans lequel la première carte à circuits (34) forme un support pour l'unité de palpage (12).

5. Capteur (10) selon l'une des revendications précédentes,
dans lequel l'émetteur de lumière (20) et le récepteur de lumière (32) sont agencés sur la première carte à circuits (34).

6. Capteur (10) selon l'une des revendications précédentes,
dans lequel la première carte à circuits (34) comprend une unité interface (38) pour la transmission sans contact d'énergie et/ou pour l'échange de données entre l'unité formant socle (14) et l'unité de palpage (12).

7. Capteur (10) selon l'une des revendications précédentes,
dans lequel l'unité formant socle (14) comprend une seconde carte à circuits (42), qui forme le stator de l'entraînement.

8. Capteur (10) selon l'une des revendications précédentes,
dans lequel l'unité formant socle (14) comprend une seconde carte à circuits (42) avec une unité interface (46) pour l'alimentation sans contact de l'unité de palpage (12) en énergie et/ou pour l'échange de données.

9. Procédé pour la détection d'objets dans une zone de surveillance (18), dans lequel on émet un faisceau de lumière émise (24), on palpe périodiquement la zone de surveillance (18) par un mouvement de rotation d'une unité de palpage (12) par rapport à une unité formant socle (14), on engendre un signal de réception à partir de la lumière réémise par des objets dans la zone de surveillance (18), et le signal de réception est exploité pour détecter des informations concernant des objets dans la zone de surveillance (18), dans lequel le mouvement rotatif est rendu possible par montage de la périphérie extérieure d'une première carte à circuits (34) de l'unité de palpage (12) dans un palier (40), et la première carte à circuits (34) forme le rotor d'un entraînement pour le mouvement de rotation de l'unité de palpage (12) par rapport à l'unité formant socle (14),
**caractérisé en ce que**
le palier (40) entoure la première carte à circuits, et **en ce que** des enroulements de moteur (36) ou des aimants sont intégrés sur la première carte à circuits (34), de sorte que la première carte à circuits (34) devient elle-même une partie de l'entraînement.
